# EUROPEAN PATENT APPLICATION

(11) **EP 4 317 105 A1**
(43) Date of publication of application: **07.02.2024**
(21) Application number: 23187865.3
(22) Date of filing: 26.07.2023
(51) Int. Cl.: C04B 35/573, C04B 35/628, C04B 35/80

(54) **NANOGRAINED SMOOTH SILICON CARBIDE INTERFACE COATING FOR IMPROVED DURABILITY**

(30) Priority: 05.08.2022 US 202217882171
(71) Applicant: RTX Corporation, Farmington, CT 06032 (US)
(72) Inventor: CALLAWAY, Evan B., Santa Barbara (US); KONOPASKE, Zachary Paul, West Hartford (US); NABLE, Jun, Hamden (US)
(74) Representative: Dehns

(57) **Abstract**

A coated fiber structure for use in a ceramic matrix composite comprises a fiber and an interface coating arrangement applied to and circumscribing the fiber. The interface coating arrangement comprises a first boron nitride layer, a silicon carbide layer extending coaxially with and in direct contact with the first boron nitride layer, and a second boron nitride layer on a side of the silicon carbide layer opposite the first boron nitride layer. The thickness of the silicon carbide layer ranges from 100 nm to 500 nm, and an RMS roughness of the silicon carbide layer is less than 20 nm.

## Description

### BACKGROUND

The present invention relates to ceramic matrix composites, and more particularly to the formation of corrosion-resistant coatings therein.

Fiber-reinforced ceramic matrix composites (CMCs) are known and used for components that are exposed to high temperatures and corrosive conditions that can degrade other kinds of materials. Under such severe conditions, such as the operating conditions in aerospace applications, even ceramic materials are vulnerable to degradation. Over time, ceramic composites can form microcracks that further expose the ceramic material to oxygen or other corrosive elements, which form undesirable phases to the detriment of the properties of the ceramic matrix composite component.

Multilayer coatings including boron nitride and silicon carbide, among other materials, can be applied to fibers to form a weak interface between the fibers and matrix material to enable desired composite characteristics. In such coating arrangements, the lifetime of the composite can be extended by increasing the thickness of the silicon carbide layer. However, surface roughness of the layer also increases with thickness, and can lead to cracking which creates pathways for oxidant ingress to inner boron nitride layers, exposing the fiber to molten borosilicate. Therefore, improved interface coatings employing silicon carbide are desirable.

### SUMMARY

A coated fiber structure for use in a ceramic matrix composite (e.g. a ceramic matrix composite as herein described or formed via a method as herein described) comprises a fiber (e.g. a ceramic fiber) and an interface coating arrangement applied to and circumscribing the fiber. The interface coating arrangement comprises a first boron nitride layer, a silicon carbide layer extending coaxially with and in direct contact with the first boron nitride layer, and a second boron nitride layer on a side of the silicon carbide layer opposite the first boron nitride layer. The thickness of the silicon carbide layer ranges from 100 nm to 500 nm, and an RMS roughness of the silicon carbide layer is less than 20 nm.

A method of forming a ceramic matrix composite (e.g. a ceramic matrix composite as herein described) comprises forming a fibrous preform by arranging a plurality of fibers, e.g. ceramic fibers, depositing a first boron nitride layer on the plurality of fibers, e.g. ceramic fibers, depositing a silicon carbide layer on the first boron nitride layer, and depositing a second boron nitride layer on a side of the silicon carbide layer opposite the first boron nitride layer. The thickness of the silicon carbide layer ranges from 100 nm to 500 nm, and an RMS roughness of the silicon carbide layer is less than 20 nm. The method further comprises depositing a silicon carbide matrix on the fibrous preform.

A ceramic matrix composite comprises: a plurality of coated fiber structures as herein described; and a silicon carbide matrix formed upon the interface coating arrangement of the plurality of coated fiber structures.

### BRIEF DESCRIPTION OF THE DRAWINGS

Certain exemplary embodiments will now be described in greater detail by way of example only and with reference to the accompanying drawings in which:
FIG. 1 is a simplified cross-sectional view of a CMC with an interface coating arrangement.
FIG. 2 is a flowchart illustrating a method of forming the CMC of FIG. 1.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents various fiber coating arrangements for improving mechanical, thermal, and/or oxidation resistance properties of CMCs.

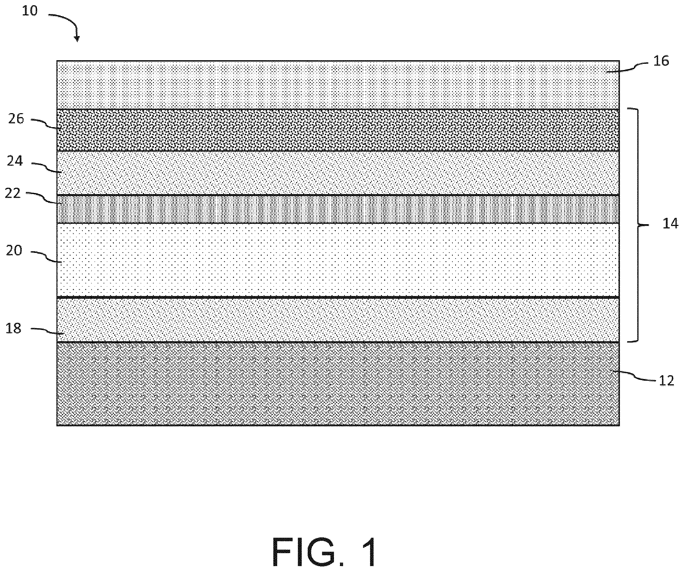

FIG. 1 is a simplified cross-sectional illustration of CMC 10 with fiber 12, interface coating arrangement 14, and matrix 16. CMC 10 can be suitable for use in, for example, a gas turbine engine. Although not visible in FIG. 1, fiber 12 is generally circumscribed by coating arrangement 14 and matrix 16, the various layers of coating arrangement 14 are coaxial with one another and fiber 12. Fiber 12 can be formed from silicon carbide (SiC) or other suitable ceramic material. Multiple fibers 12 of the encompassing CMC 10 can be arranged in various woven or non-woven, unidirectional or multidirectional architectures. Matrix 16 can be formed from SiC or other suitable ceramic material.

Beginning closest to fiber 12 and working outward toward matrix 16, interface coating arrangement 14 includes inner boron nitride (BN) layer 18, SiC layer 20, optional carbon layer 22, outer BN layer 24, and optional silicon-doped boron nitride (SiBN) layer 26, having a silicon content ranging from 10% by weight (wt%) to 20 wt%. As used herein, the terms "inner" and "outer" are relative to one another and fiber 12, such that an outer layer (e.g., outer BN layer 24) is positioned further from fiber 12 than an inner layer (e.g., inner BN layer 18). Inner BN layer 18 can have a thickness ranging from 50 nm to 200 nm. SiC layer 20 can have a thickness ranging from 100 nm to 500 nm. Carbon layer 22 can have a thickness ranging from 20 nm to 50 nm. Outer BN layer 24 can have a thickness ranging from 50 nm to 200 nm. SiBN layer 26 can have a thickness ranging from 50 nm to 200 nm. Accordingly, SiC layer 20 is generally thicker than the other individual layers of coating arrangement 14, and in some cases, at least twice the thickness.

In an operational environment, as cracks form and propagate through matrix 16 and into interface coating arrangement 14, outer BN layer 24 can deflect cracks away from SiC layer 20 and become debonded. If included in coating arrangement 14, carbon layer 22 can also become debonded to allow SiC layer 20 to remain intact and protect inner BN layer 18 and fiber 12 from oxidation. SiBN layer 26, if included, can increase the silicon content of interface coating arrangement 14 between SiC layer 20 and matrix 16, oxidizing to form, with boron, a more stable glassy material than molten boron (i.e., boria) alone.

Silicon within SiC layer 20 can oxidize to form a protective silica layer, preventing any oxidized and/or molten boron from outer BN layer 24 from infiltrating inner layers and fiber 12. It is therefore desirable to create a relatively thick (e.g., 200 nm to 500 nm) SiC layer 20. However, the roughness of SiC generally increases with thickness, as the formation of columnar grains of SiC in the layer can grow orthogonal to the direction of fiber 12, forming large nodules on the outer (i.e., matrix-facing) surface of SiC layer 20. Such roughness can cause locking of matrix 16 sliding with interface coating arrangement 14 at the surface of SiC layer 20, leading to cracking of SiC layer 20 and exposure of inner BN layer 18 and fiber 12 to oxidation. Process parameters for the application of SiC layer 20 can be used to reduce the roughness of the layer at the desired thickness, as is discussed in greater detail below.

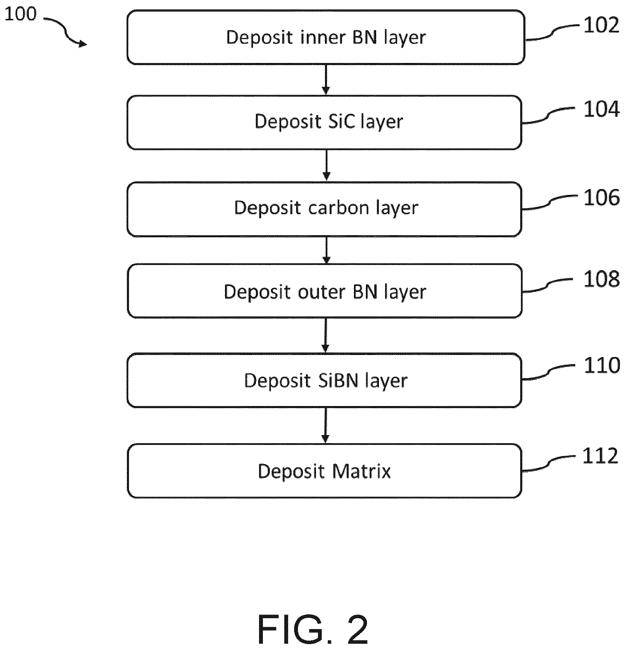

FIG. 2 is a method flowchart illustrating steps 102-112 of method 100 for forming a CMC, such as CMC 10, with interface coating arrangement 14. At step 102, a preform of multiple fibers 12 can be placed in tooling, and inner BN layer 18 deposited on fibers 12 using chemical vapor infiltration (CVI).

At step 104, SiC layer 20 can be deposited onto inner BN layer 18, also using CVI. Formation of columnar grains is typically favored during deposition of SiC under standard conditions. Adjustments to the CVI process parameters can be made to instead favor formation of nanoscale equiaxed grains (i.e., those less than 10 nm in diameter), which reduces surface roughness of SiC layer 20, desirably, to a root mean square (RMS) value of less than 20 nm. Accordingly, the pressure used can be greater than 10 kPa, while the temperature can be 900°C to 950°C. Because reactant vapors cannot always access the preform interior as easily as the exterior due to tortuous paths through the fiber architecture, the thickness of SiC layer 20 can be near the upper limit (i.e., 500 nm) on external preform fibers 12 (i.e., those of outer fiber layers), and closer to the lower limit (i.e., 100 nm) and internal preform fibers 12. A thicker SiC layer 20 on external fibers 12 is desirable, as these external fibers 12 are more exposed to oxidation from the operating environment than internal fibers 12.

At step 106, carbon layer 22 can optionally be deposited on SiC layer 20. At step 108, outer BN layer 24 can be deposited on carbon layer 22, if included, and on SiC layer 20 if not. At step 110, SiBN layer 26 can optionally be deposited on outer BN layer 24. Steps 106, 108, and 110 can all be carried out using CVI.

At step 112, matrix 16 can be deposited on coating arrangement 14 of the preform. Matrix 16 can be deposited using CVI, which can be carried out until the resulting CMC (e.g., CMC 10) has reached the desired residual porosity. Other techniques for matrix formation are contemplated herein, such as one or a combination of slurry infiltration, melt infiltration, and polymer infiltration and pyrolysis. Protective coatings for the CMC (e.g., thermal barrier coatings, environmental barrier coatings, etc.) can optionally be applied after step 112.

It should be understood that additional layers and/or combinations of materials in a layer can be included in alternative embodiments of interface coating arrangement 14 without departing from the scope of the invention. For example, outer BN layer 24 can be doped with silicon such that no distinct SiBN layer 26 is included. Carbon can alternatively and/or additionally be included. Inner BN layer 18 can also be doped with silicon, or a distinct adjacent SiBN layer added.

A CMC component formed with the disclosed fiber coating arrangements can be incorporated into aerospace, maritime, or industrial equipment, to name a few, non-limiting examples.

### Discussion of Possible Embodiments

The following are non-exclusive descriptions of possible embodiments of the present invention.

A coated fiber structure for use in a ceramic matrix composite (e.g. a ceramic matrix composite as herein described or formed via a method as herein described) comprises a fiber (e.g. a ceramic fiber) and an interface coating arrangement applied to and circumscribing the fiber. The interface coating arrangement comprises a first boron nitride layer, a silicon carbide layer extending coaxially with and in direct contact with the first boron nitride layer, and a second boron nitride layer on a side of the silicon carbide layer opposite the first boron nitride layer. The thickness of the silicon carbide layer ranges from 100 nm to 500 nm, and an RMS roughness of the silicon carbide layer is less than 20 nm.

The fiber structure of the preceding paragraph can optionally include, additionally and/or alternatively, any one or more of the following features, configurations and/or additional components:

In the above fiber structure, a thickness of each of the first boron nitride layer and the second boron nitride layer can range from 50 nm to 200 nm.

Any of the above fiber structures can further include: a carbon layer extending coaxially with and in direct contact with the silicon carbide layer.

In any of the above fiber structures, a thickness of the carbon layer can range from 20 nm to 50 nm.

In any of the above fiber structures, the second boron nitride layer can extend coaxially with and in direct contact with the carbon layer.

Any of the above fiber structures can further include a silicon-doped boron nitride layer extending coaxially with and in direct contact with the second boron nitride layer.

In any of the above fiber structures, a thickness of the silicon-doped boron nitride layer can range from 50 nm to 200 nm.

A ceramic matrix composite can include a plurality of any of the above coated fiber structures, and a silicon carbide matrix formed upon the interface coating arrangement of the plurality of coated fiber structures.

A method of forming a ceramic matrix composite (e.g. a ceramic matrix composite as herein described) comprises forming a fibrous preform by arranging a plurality of fibers, e.g. ceramic fibers, depositing a first boron nitride layer on the plurality of fibers, e.g. ceramic fibers, depositing a silicon carbide layer on the first boron nitride layer, and depositing a second boron nitride layer on a side of the silicon carbide layer opposite the first boron nitride layer. The thickness of the silicon carbide layer ranges from 100 nm to 500 nm, and an RMS roughness of the silicon carbide layer is less than 20 nm. The method further comprises depositing a silicon carbide matrix on the fibrous preform.

The method of the preceding paragraph can optionally include, additionally and/or alternatively, any one or more of the following features, configurations and/or additional components:

In the above method, a thickness of each of the first boron nitride layer and the second boron nitride layer can range from 50 nm to 200 nm.

In any of the above methods, each of the first boron nitride layer and the second boron nitride layer can be deposited using chemical vapor infiltration.

Any of the above methods can further include depositing, using chemical vapor infiltration, a carbon layer on the silicon carbide layer such that it is disposed between the silicon carbide layer and the second boron nitride layer.

In any of the above methods, a thickness of the carbon layer can range from 20 nm to 50 nm.

In any of the above methods, the step of depositing the second boron nitride layer can include depositing the second boron nitride layer on the carbon layer.

Any of the above methods can further include depositing, using chemical vapor infiltration, a silicon-doped boron nitride layer on the second boron nitride layer.

In any of the above methods, a thickness of the silicon-doped boron nitride layer can range from 50 to 200 nm.

In any of the above methods, the silicon carbide layer can be deposited using chemical vapor infiltration.

In any of the above methods, the chemical vapor infiltration can be carried out at a pressure greater than 10 kPa, and at a temperature ranging from 900°C to 950°C.

In any of the above methods, the matrix can be deposited using chemical vapor infiltration.

Any of the above methods can further include depositing at least one of an environmental barrier coating and a thermal barrier coating over the matrix.

Roughness may be determined by observing the peaks and valleys in the surface using microscopy. The RMS roughness referred to herein may therefore be determined via microscopy.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

Certain embodiments of the present disclosure are as follows:
1. A coated fiber structure for use in a ceramic matrix composite, the coated fiber structure comprising:
   a fiber; and
   an interface coating arrangement applied to and circumscribing the fiber, the interface coating arrangement comprising:
      a first boron nitride layer;
      a silicon carbide layer extending coaxially with and in direct contact with the first boron nitride layer; and
      a second boron nitride layer on a side of the silicon carbide layer opposite the first boron nitride layer;
      wherein a thickness of the silicon carbide layer ranges from 100 nm to 500 nm; and
      wherein an RMS roughness of the silicon carbide layer is less than 20 nm.
2. The fiber structure of embodiment 1, wherein a thickness of each of the first boron nitride layer and the second boron nitride layer ranges from 50 nm to 200 nm.
3. The fiber structure of embodiment 1 and further comprising: a carbon layer extending coaxially with and in direct contact with the silicon carbide layer.
4. The fiber structure of embodiment 3, wherein a thickness of the carbon layer ranges from 20 nm to 50 nm.
5. The fiber structure of embodiment 3, wherein the second boron nitride layer extends coaxially with and in direct contact with the carbon layer.
6. The fiber structure of embodiment 1 and further comprising: a silicon-doped boron nitride layer extending coaxially with and in direct contact with the second boron nitride layer.
7. The fiber structure of embodiment 6, wherein a thickness of the silicon-doped boron nitride layer ranges from 50 nm to 200 nm.
8. A ceramic matrix composite comprising:
   a plurality of coated fiber structures of embodiment 1; and
   a silicon carbide matrix formed upon the interface coating arrangement of the plurality of coated fiber structures.
9. A method of forming a ceramic matrix composite, the method comprising:
   forming a fibrous preform by:
      arranging a plurality of ceramic fibers;
      depositing a first boron nitride layer on the plurality of ceramic fibers;
      depositing a silicon carbide layer on the first boron nitride layer; and
      depositing a second boron nitride layer on a side of the silicon carbide layer opposite the first boron nitride layer;
      wherein a thickness of the silicon carbide layer ranges from 100 nm to 500 nm; and
      wherein an RMS roughness of the silicon carbide layer is less than 20 nm; and
   depositing a silicon carbide matrix on the fibrous preform.
10. The method of embodiment 9, wherein a thickness of each of the first boron nitride layer and the second boron nitride layer ranges from 50 nm to 200 nm.
11. The method of embodiment 9, wherein each of the first boron nitride layer and the second boron nitride layer is deposited using chemical vapor infiltration.
12. The method of embodiment 9, and further comprising: depositing, using chemical vapor infiltration, a carbon layer on the silicon carbide layer such that it is disposed between the silicon carbide layer and the second boron nitride layer.
13. The method of embodiment 12, wherein a thickness of the carbon layer ranges from 20 nm to 50 nm.
14. The method of embodiment 12, wherein the step of depositing the second boron nitride layer comprises depositing the second boron nitride layer on the carbon layer.
15. The method of embodiment 9 and further comprising: depositing, using chemical vapor infiltration, a silicon-doped boron nitride layer on the second boron nitride layer.
16. The method of embodiment 15, wherein a thickness of the silicon-doped boron nitride layer ranges from 50 to 200 nm.
17. The method of embodiment 9, wherein the silicon carbide layer is deposited using chemical vapor infiltration.
18. The method of embodiment 17, wherein the chemical vapor infiltration is carried out at a pressure greater than 10 kPa, and at a temperature ranging from 900°C to 950°C.
19. The method of embodiment 9, wherein the matrix is deposited using chemical vapor infiltration.
20. The method of embodiment 9 and further comprising: depositing at least one of an environmental barrier coating and a thermal barrier coating over the matrix.

## Claims

1. A coated fiber structure for use in a ceramic matrix composite, the coated fiber structure comprising:
a fiber; and
an interface coating arrangement applied to and circumscribing the fiber, the interface coating arrangement comprising:
a first boron nitride layer;
a silicon carbide layer extending coaxially with and in direct contact with the first boron nitride layer; and
a second boron nitride layer on a side of the silicon carbide layer opposite the first boron nitride layer;
wherein a thickness of the silicon carbide layer ranges from 100 nm to 500 nm; and
wherein an RMS roughness of the silicon carbide layer is less than 20 nm.

2. The fiber structure of claim 1, wherein a thickness of each of the first boron nitride layer and the second boron nitride layer ranges from 50 nm to 200 nm.

3. The fiber structure of claim 1 or claim 2, further comprising: a carbon layer extending coaxially with and in direct contact with the silicon carbide layer;
optionally wherein a thickness of the carbon layer ranges from 20 nm to 50 nm.

4. The fiber structure of claim 3, wherein the second boron nitride layer extends coaxially with and in direct contact with the carbon layer.

5. The fiber structure of any one of claims 1-4, further comprising: a silicon-doped boron nitride layer extending coaxially with and in direct contact with the second boron nitride layer;
optionally wherein a thickness of the silicon-doped boron nitride layer ranges from 50 nm to 200 nm.

6. A ceramic matrix composite comprising:
a plurality of coated fiber structures of any preceding claim; and
a silicon carbide matrix formed upon the interface coating arrangement of the plurality of coated fiber structures.

7. A method of forming a ceramic matrix composite, the method comprising:
forming a fibrous preform by:
arranging a plurality of ceramic fibers;
depositing a first boron nitride layer on the plurality of ceramic fibers;
depositing a silicon carbide layer on the first boron nitride layer; and
depositing a second boron nitride layer on a side of the silicon carbide layer opposite the first boron nitride layer;
wherein a thickness of the silicon carbide layer ranges from 100 nm to 500 nm; and
wherein an RMS roughness of the silicon carbide layer is less than 20 nm; and
depositing a silicon carbide matrix on the fibrous preform.

8. The method of claim 7, wherein a thickness of each of the first boron nitride layer and the second boron nitride layer ranges from 50 nm to 200 nm.

9. The method of claim 7 or claim 8, wherein each of the first boron nitride layer and the second boron nitride layer is deposited using chemical vapor infiltration.

10. The method of any one of claims 7-9, further comprising: depositing, using chemical vapor infiltration, a carbon layer on the silicon carbide layer such that it is disposed between the silicon carbide layer and the second boron nitride layer;
optionally wherein a thickness of the carbon layer ranges from 20 nm to 50 nm.

11. The method of claim 10, wherein the step of depositing the second boron nitride layer comprises depositing the second boron nitride layer on the carbon layer.

12. The method of any one of claims 7-11 further comprising: depositing, using chemical vapor infiltration, a silicon-doped boron nitride layer on the second boron nitride layer;
optionally wherein a thickness of the silicon-doped boron nitride layer ranges from 50 to 200 nm.

13. The method of any one of claims 7-12, wherein the silicon carbide layer is deposited using chemical vapor infiltration.

14. The method of any one of claims 7-13, wherein the matrix is deposited using chemical vapor infiltration;
and/or wherein the method further comprises: depositing at least one of an environmental barrier coating and a thermal barrier coating over the matrix.

15. The method of any one of claims 7-14, wherein the chemical vapor infiltration is carried out at a pressure greater than 10 kPa, and at a temperature ranging from 900°C to 950°C.
